Europäisches Patentamt

European Patent Office

Office européen des brevets

(11) Veröffentlichungsnummer : **0 117 437 B1**

(12) **EUROPÄISCHE PATENTSCHRIFT**

(45) Veröffentlichungstag der Patentschrift :
12.11.86

(21) Anmeldenummer : 84100807.1

(22) Anmeldetag : 26.01.84

(51) Int. Cl.⁴ : **H 01 L 41/08, F 42 C 11/02, F 41 F 13/08**

(54) Verfahren zur Erzeugung der für den Betrieb von eine Strahlung emittierenden Halbleiterdioden erforderlichen Stromimpulse und Anordnung zur Durchführung des Verfahrens.

(30) Priorität : 02.02.83 DE 3303404
28.06.83 DE 3323243

(43) Veröffentlichungstag der Anmeldung :
05.09.84 Patentblatt 84/36

(45) Bekanntmachung des Hinweises auf die Patenterteilung : 12.11.86 Patentblatt 86/46

(84) Benannte Vertragsstaaten :
BE DE FR GB IT NL

(56) Entgegenhaltungen :
DE-A- 1 578 002
US-A- 3 363 566
US-A- 3 670 653

(73) Patentinhaber : Leuze electronic GmbH + Co.
In der Braike 1
D-7311 Owen-Teck (DE)

(72) Erfinder : Stiefelmeyer, Günther, Ing. grad.
Vordere Strasse 99
D-7311 Owen-Teck (DE)
Erfinder : Langbein, Konrad, Ing. grad.
Limburgstrasse 10
D-7311 Dettingen-Teck (DE)

Jouve, 18, rue St-Denis, 75001 Paris, France

**0 117 437**

**Beschreibung**

Um eine Strahlung aussendende Halbleiterdioden (Lumineszenzdioden) impulsartig in den strahlungabgebenden Zustand zu versetzen, bedarf es Zufuhr eines hinreichenden Impulsstromes. Zur Erzeugung der erforderlichen Stromimpulse ist es bekannt, die benötigte Impulsenergie während der Impulspause mit einem Kondensator zu speichern. Die Entladung des Speichers erfolgt dann durch Triggern eines schnellen elektronischen Schalters, zum Beispiel in Form eines Thyristors.

Der Mindestaufwand für eine derartige Anordnung umfaßt demnach außer der eine Strahlung emittierenden Halbleiterdiode wenigstens eine Speisespannungsquelle, einen Ladewiderstand, einen Speicherkondensator, einen Thyristor und einen Steuergenerator für die Triggerung sowie die erforderlichen Schaltverbindungen.

Der Erfindung liegt die Aufgabe zugrunde, ein Verfahren und eine Anordnung zur Erzeugung der für den Betrieb von eine Strahlung aussendenden Halbleiterdioden notwendigen Stromimpulse zu finden, die einen Verzicht auf eine besondere Speisespannungsquelle einschließlich elektrischer Speicher- und Triggerelemente ermöglichen sowie die Herstellung einer in sich abgeschlossenen, mobilen, mechanisch stabilen und kleinvolumigen Baueinheit erlaubt, so daß die Voraussetzung für einen erweiterten Einsatz bzw. für eine umfassendere Anwendung von Halbleiterdioden geschaffen ist, die bei Zufuhr eines entsprechenden Impulsstromes eine Strahlung emittieren, welche im unsichtbaren oder im sichtbaren Bereich liegen kann.

Die Erfindung, wie sie in den Ansprüchen gekennzeichnet ist, löst diese Aufgabe.

Einige durch die Erfindung erzielte Vorteile sind beispielsweise darin zu sehen, daß sie den Einsatz von berührungsbehafteten Endschaltern mit optischer Signalübertragung ermöglichen, die ohne Stromzuführung (passive Detektoren) arbeiten. Ferner lassen sich bei Anwendung von geeigneten lichtelektrischen Empfangseinrichtungen in Verbindung mit Zielscheiben unzählige Schießvorgänge durchführen, wobei besonders vorteilhaft ist, daß jedermann seine eigene Waffe benutzen kann.

Das erfindungsgemäße Verfahren und Anordnungen zur Durchführung des Verfahrens werden im nachstehenden anhand der Zeichnung erläutert.

Es zeigen :

Figur 1   eine beispielsweise und prinzipielle Schaltungsanordnung zur Durchführung des Verfahrens,

Figur 2   ein vereinfachtes Ersatzschaltbild des Sendekreises für den Zeitabschnitt des Impulsanstiegs,

Figur 3   ein vereinfachtes Ersatzschaltbild des Sendekreises für den Zeitabschnitt des Impulsdaches,

Figur 4   einen Längsschnitt durch eine beispielsweise Ausführungsform der Anordnung,

Figur 5   die einzelnen Bauelemente der Ausführungsform gemäß Fig. 4 in auseinandergezogenem Zustand und in perspektivischer Darstellung,

Figur 6   eine perspektivische Ansicht einer Ausführungsvariante des Gehäuses der Anordnung nach den Figuren 4 und 5.

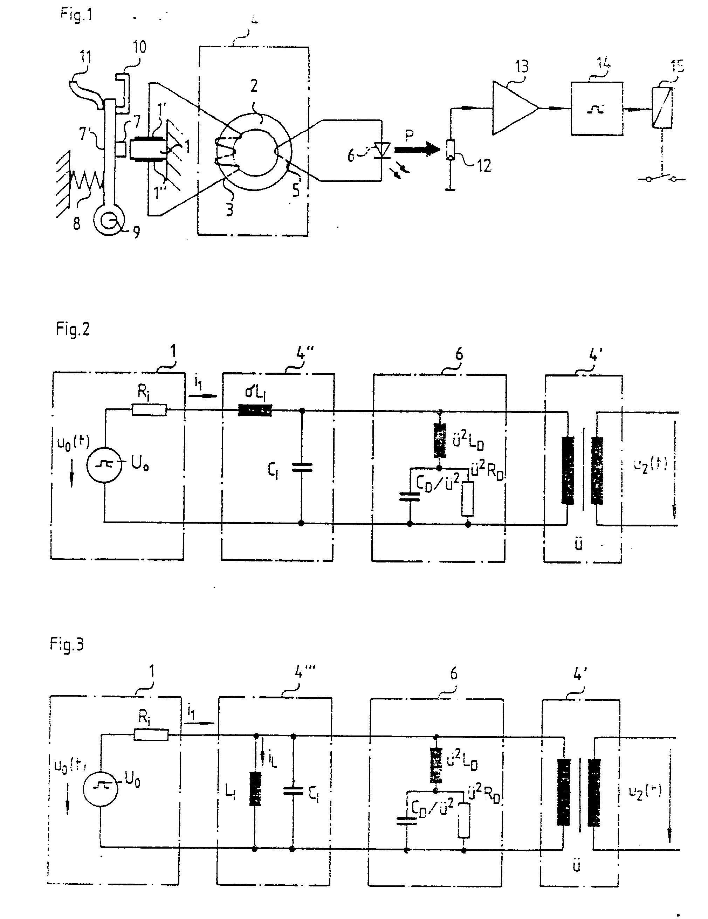

Die Schaltungsanordnung gemäß Fig. 1 enthält ein Piezoelement 1 (piezoelektrischer Kristall), dessen gegenüberliegende Oberflächen 1' und 1" an die auf einen Kern 2 aufgebrachte Primärwicklung 3 eines Impulsübertragers 4 angeschlossen sind. Auf dem aus Ferrit bestehenden Kern 2 ist des weiteren die Sekundärwicklung 5 des Impulsübertragers 4 angebracht, an welche eine strahlungsemittierende Halbleiterdiode 6 in Form einer Lumineszenzdiode angeschlossen ist.

Dem Piezoelement 1 ist ein Schlagkörper 7 zugeordnet, der unter der Wirkung einer Druckfeder 8 (Federkraftspeicher) steht und um eine Achse 9 drehbar ist. Der Schlagkörper 7 wird mittels eines Arretierglieds 10 in seiner gespannten Lage gehalten und kann nach jedem Auslösevorgang mit Hilfe eines Rückholhebels 11 stets wieder in seine Spannlage gebracht werden. Das Auslösen des Schlagkörpers 7 sowie dessen Rückstellung in seine Spannlage kann dabei wahlweise manuell oder selbsttätig mechanisch erfolgen, gegebenenfalls auch taktweise. Der Lumineszenzdiode 6 ist in einem entsprechenden Abstand ein Fotoempfänger 12 in Form eines Fototransistors, eine Fotodiode oder eines gleichwirkenden Bauelements zugeordnet, dem ein Impulsverstärker 13 nachgeschaltet ist, auf welchen ein Monoflop 14 oder dergleichen folgt, an welches ein Relais 15 angeschlossen ist, das bei Impulsgabe, d. h. beim Aussenden eines Strahlungsimpulses durch die Lumineszenzdiode, einen definierten Schaltvorgang auslöst.

Die Schaltungsanordnung arbeitet wie folgt :

Wird die Arretierung des Schlagkörpers 7 durch Entfernen des Arretierglieds 10 aus seiner Bewegungsbahn aufgehoben, so wird die in der am Hebelarm 7' des Schlagkörpers angreifenden Druckfeder 8 gespeicherte Energie schlagartig freigesetzt.

Dies hat zur Folge, daß der Schlagkörper 7 ebenfalls schlagartig auf das Piezoelement 1 auftrifft. Infolge dieser kurzzeitigen mechanischen Beanspruchung des Piezoelements auf Druck tritt an dessen Oberflächen 1' und 1" durch innere Ladungsverschiebung eine Spannung auf, die an der Primärwicklung 3 des Impulsübertragers 4 ansteht und induktiv in dessen Sekundärwicklung 5 eingekoppelt wird. Das Übersetzungsverhältnis ü des Impulsübertragers 4 richtet sich dabei nach der Höhe der primärseitig erzeugten Spannung und nach der für das Pulsen der die Strahlung emittierenden Halbleiterdiode

2

erforderlichen Stärke des Stromimpulses unter Berücksichtigung der dem Schaltkreis immanenten physikalischen und elektrischen Eigenschaften. Es ist so gewählt, daß im Sekundärkreis ein Stromimpuls von einer solchen Größe entsteht, daß die Lumineszenzdiode 6 einen Strahlungsimpuls aussendet. Hinreichende Stromimpulswerte wurden beispielsweise bei einem Übersetzungsverhältnis von ü ~ 15 bis 20 : 1 erzielt. Dabei ist auch der mechanische/elektrische Wirkungsgrad, d. h. das Maß für die Umwandlung von mechanischer in piezoelektrische Energie, in Betracht zu ziehen.

Im Ersatzschaltbild nach Fig. 2 kennzeichnen $u_0$ (t) die EMK und $R_i$ den Innenwiderstand des Piezoelements 1. Mit 4″ ist der die Streuinduktivität $\sigma L_I$ und die Eigenkapazität $C_I$ umfassende Teil des Impulsübertragers 4 bezeichnet. Ferner symbolisiert 4′ den idealen Übertrager mit dem Übersetzungsverhältnis ü und $u_2$ (t) die an der Lumineszenzdiode anliegende Spannung. Die Lumineszenzdiode 6 wird durch die auf die Primärseite transformierte Zuleitungsinduktivität $ü^2 \cdot L_D$, die Diffusionskapazität des pn-Übergangs $C_D/ü^2$ und dem Sperrschichtwiderstand $ü^2 \cdot R_D$ repräsentiert. In weiterer Näherung wird die Lumineszenzdiode 6 durch die lineare Approximation $R'_D$ der Größen $R_D$, $C_D$ und $L_D$ für den gesamten Einschaltvorgang charakterisiert. Damit lautet die Differentialgleichung :

$$u_0(t) = R_i \cdot i_1 + \sigma L_I \frac{di_1}{dt} + u_2(t) \cdot ü$$

wobei $i_1$ den Strom durch das Piezoelement bedeutet.

Die Lösung dieser Differentialgleichung ergibt für den Einschaltvorgang :

$$u_2(t) = \frac{R'_D}{R_i + ü^2 R'_D} U_0 \left[ 1 + \frac{\alpha_2}{\alpha_1 - \alpha_2} e^{\alpha_1 t} - \frac{\alpha_1}{\alpha_1 - \alpha_2} e^{\alpha_2 t} \right]$$

mit

$$\alpha_{1,2} = -\frac{1}{2}\left(\frac{R_i}{\sigma L_I} + \frac{1}{ü^2 R'_D C_I}\right) \pm \sqrt{\frac{1}{4}\left(\frac{R_i}{\sigma L_I} + \frac{1}{ü^2 R'_D C_I}\right)^2 - \frac{R_i + ü^2 R'_D}{ü^2 R'_D} \cdot \frac{1}{\sigma L_I C_I}}$$

Dabei bedeutet $\alpha_{1,2}$ die komplexe Frequenz.
Werden die physikalischen Größen
Übertragungsfaktor

$$A_ü = \frac{ü^2 R'_D}{R_i + ü^2 \cdot R'_D},$$

Periodendauer

$$\tau_A = \pm \sqrt{A_ü \, \sigma L_I \, C_I}$$

und die Dämpfungskonstante

$$D_A = \frac{1}{2}\left(\frac{R_i}{\sigma L_I} + \frac{1}{ü^2 R'_D C_I}\right) \tau_A$$

eingeführt, so erhält man

$$\alpha_{1,2} = D_A/\tau_A \pm 1/\tau_A \sqrt{D_A^2 - 1}$$

Im Falle der kritischen Dampfung mit $D_A = 1$ klingen die Einschwingvorgänge am schnellsten ab und es gilt

$$\alpha_1 = \alpha_2 = -1/\tau_A .$$

Die Lösung der Differentialgleichung lautet jetzt :

$$u_2(t) = Aü \frac{U_0}{ü^2} \left[ 1 - \left(1 + \frac{t}{\tau_A}\right) e^{-t/\tau_A} \right]$$

mit

$$\tau_A = \sqrt{\sigma L_I \, C_I \frac{ü^2 R'_D}{R_i + ü^2 R'_D}} .$$

Die Anstiegszeit $t_r$ zwischen 10 % und 90 % des Endwerts der Ausgangsspannung $u_2(t)$ beträgt

$$t_r = 3,35 \, \tau_A \, .$$

Das bedeutet, daß für kurze Anstiegszeiten $\sigma L_l$ und $C_l$ klein gehalten werden müssen. Eine Verkürzung der Anstiegszeit ist ferner durch Vergrößerung von $R_i$ möglich.

Hierzu ein Zahlenbeispiel :

Angenommene Werte : $R_D' \approx 0,7\Omega$ ; $R_i = 10^4\Omega$ ; $u_2(t) = 2,1 \, V$ ; $\hat{i}_2(t) = 3A$, $\ddot{u}^2 = 400$.

Zur quantitativen Abschätzung der obigen Gleichung soll für den Zeitraum $4 \, \tau_A = 0,4 \, \mu s$ die EMK des Piezoelements als konstant angesehen werden, also $U_0 = \text{const.}$

$$\tau_A^2 = \sigma L_l \, C_l \, \frac{\ddot{u}^2 \, R_D'}{R_i + \ddot{u}^2 \, R_D'} \, ;$$

Werte eingesetzt ergibt :

$$10^{-14} \, s^2 = \sigma L_l \, C_l \, \frac{280}{10\,280} \rightarrow \sigma L_l \, C_l = 3,67 . 10^{-13} \, s^2 \, .$$

Das Produkt der parasitären Größen Streuinduktivität und Eigenkapazität liegt damit in einer realistischen Größenordnung.

Für $U_0$ folgt aus der oben angegebenen Lösung der Differentialgleichung :

$$U_0 = u_2(t) \, \frac{\ddot{u}^2}{A\ddot{u}} \, [1 - (1 + \tau/\tau_A) \, e^{-t/\tau_A}]^{-1}$$

und damit

$$U_0 \approx 34 \, kV \, .$$

Das Ersatzschaltbild gemäß Fig. 3 beschreibt das Verhalten des Impulsdaches und stimmt bis auf die parasitären Bauelemente des Impulsübertragers 4 mit der Fig. 2 überein. Da der Einschaltvorgang beendet ist, kann die Streuinduktivität $\sigma \, L_l$ unberücksichtigt bleiben. Es muß dafür die zur Eigenkapazität $C_l$ parallel liegende Hauptinduktivität $L_l$ beachtet werden. Diese Größen sind im Ersatzschalbild durch das Bezugszeichen 4''' gekennzeichnet.

Unter der Voraussetzung, daß $R_i$ und $R_D'$ kleiner sind als der Resonanzwiderstand $\sqrt{L_l/C_l}$, ist die Eigenkapazität $C_l$ vernachlässigbar. Damit lautet die Differentialgleichung unter Berücksichtigung der obigen Näherung für die strahlungemittierende Halbleiterdiode

$$u_0(t) = R_i \, i_L + \frac{R_i + R_D'}{R_D'} \, L_l \, \frac{di_L}{dt} \, ,$$

wobei $i_L$ den Strom durch die Hauptinduktivität $L_l$ bedeutet.

Die Lösung dieser Gleichung ergibt für den Ausschaltvorgang.

$$u_2(t) = \frac{U_0}{\ddot{u}^2} \, \frac{\ddot{u}^2 \, R_D'}{R_i + \ddot{u}^2 \, R_D'} \, e^{-t/\tau_D} = \frac{U_0}{\ddot{u}^2} \, A\ddot{u} \, e^{-t/\tau_D}$$

mit

$$\tau_D = \frac{R_i + \ddot{u}^2 \, R_D'}{R_i . \ddot{u}^2 \, R_D'} \, L_l \, .$$

Die Ausgangsspannung $u_2(t)$ nimmt mit einer durch $\tau_D$ definierten Dachschräge ab und bestimmt damit die Impulsbreite $t_B$. Zur Vergrößerung der Impulsbreite $t_B$ muß die Hauptinduktivität $L_l$ vergrößert werden.

Das erfindungsgemäße Verfahren läßt sich grundsätzlich in solchen Fällen anwenden, in denen zur Erzeugung der für den Betrieb von strahlungemittierenden Halbleiterdioden (Lumineszenzdioden) erforderlichen Stromimpulse das Bereitstellen einer Speisespannungsquelle umständlich ist oder Schwierigkeiten bereitet, oder wenn das Verlegen von Kabelzuführungen zur Unhandlichkeit von Geräten führt. Die Erfindung ermöglicht beispielsweise den Einsatz von berührungsbehafteten Endschaltern mit optischer Signalübertragung, die ohne Stromzuführung (passive Detektoren) arbeiten.

Zweckmäßigerweise ist der Kern des Übertragers als Ringkern ausgebildet.

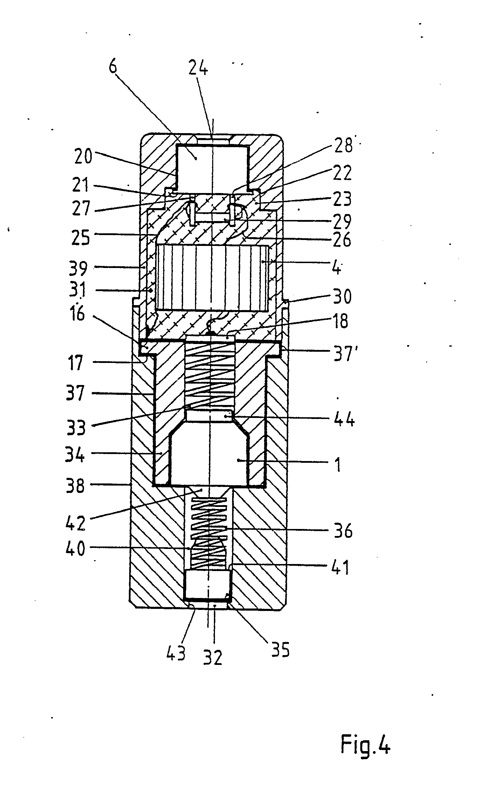

Wie aus Fig. 4 ersichtlich ist, enthält die Anordnung zwei achsgleich zueinander liegende Gehäuseteile 38 und 39, die baulich miteinander vereinigt sind und mit Ausnahme des den Vorgang auslösenden Schlagbolzens sämtliche Bauelemente aufnehmen, welche für die Erzeugung und Aussendung eines Strahlungsimpulses erforderlich sind.

Das Gehäuseteil 38 weist zu diesem Zweck zwei koaxial zueinander liegende Bohrungen 37 und 40 auf, von denen die mit 40 bezeichnete einen geringeren Durchmesser besitzt als die Bohrung 37. In der Bohrung 40 sind ein Stößel 35 und eine Rückstellfeder 36 untergebracht, wobei der Stößel gegen die Federkraft axial frei beweglich geführt ist. Die Rückstell- oder Druckfeder 36 stützt sich einerseits an einer Schulter 41 des Stößels 35 und andererseits an einem konischen Ansatz 42 des Piezoelements 1 ab, der in die Bohrung bzw. Ausnehmung 40 im Gehäuseteil 38 hineinragt. Die Rückwärtsbewegung des Stößels 35 ist durch einen Anschlag 43 begrenzt, der durch eine achsgleich zur Bohrung 40 im Bodenteil des Gehäuseteils 38 angebrachte Durchtrittsöffnung für den Zugang des nicht dargestellten Schlagbolzen gewonnen ist. Das Piezoelement 1 ist im Bereich seines zylindrischen Teils mit einem Mantel aus elektrisch isolierendem Material umgeben und besitzt einen nicht isolierten Ansatz 44 geringeren Durchmessers, an dem eine Kontaktfeder 33 zur Anlage kommt, deren anderes Ende mit einem Kontaktplättchen 18 leitend verbunden ist. Das Piezoelement bzw. die Piezosäule und die Kontaktfeder sind dabei in eine Aufnahmebuchse 34 eingesetzt, die formschlüssig in der Bohrung 37 sitzt und mit einem Bund 16 versehen ist, der an der durch eine Erweiterung 37' der Bohrung 37 entstandenen Fläche 17 zur Anlage kommt. Es hat sich als vorteilhaft erwiesen, zwischen der stößelseitigen Stirnfläche des Piezoelements 1 und der dieser zugeordneten Anlagefläche im Gehäuseteil 38 eine stoßelastische Zwischenlage zum Beispiel in Form eines O-Rings oder dgl. vorzusehen.

Im Gehäuseteil 39, das beim Ausführungsbeispiel in das Gehäuseteil 38 eingeschoben und mit diesem beispielsweise durch Kleben fest vereinigt ist, sind ein Übertrager 4 und eine Halbleiterdiode 6 in Form einer Lumineszenzdiode untergebracht. Der eine Anschluß der Eingangswicklung (Primärwicklung) des Übertragers ist elektrisch leitend mit dem Kontaktplättchen 18 der Kontaktfeder 33 verbunden, der andere Anschluß der Eingangswicklung ist an die Innenwandung des Gehäuseteils 39 geführt und liegt damit an Masse.

Die Halbleiterdiode 6 bzw. deren Gehäuse sitzt formschlüssig in einer Aufnahmebohrung 20 des Gehäuseteils 39. Das Diodengehäuse weist einen bundförmigen Anschlag 21 auf, der zur Anlage an die Bodenfläche 22 einer Zwischenbohrung 23 kommt. In der Frontwandung des Gehäuseteils 39 befindet sich eine Austrittsöffnung 24 für die Strahlung der Lumineszenzdiode 6. Die beiden Enden 25 und 26 der Ausgangswicklung (Sekundärwicklung) des Übertragers 4 sind an die Anschlüsse 27 und 28 der Lumineszenzdiode 6 geführt. Parallel zu den besagten Anschlüssen liegt eine Freilaufdiode 29, die sicherstellt, daß die Halbleiter- bzw. Lumineszenzdiode 6 stets mit einem definierten Stromimpuls beaufschlagt wird. Der Übertrager 4 einschließlich seiner Wicklungsanschlüsse, die Anschlüsse der Lumineszenzdiode 6 und die Freilaufdiode 29 sind zweckmäßigerweise in eine Gießmasse 31 eingebettet. Das Gehäuseteil 39 ist mit einem flanschförmigen Ansatz 30 versehen, der im vereinigten Zustand der beiden Gehäuseteile an der Stirnfläche des Gehäuseteils 38 anliegt. Die Verbindung des Gehäuseteils 38 mit dem Gehäuseteil 39 kann auch durch Verschrauben oder in anderer geeigneter Form verwirklicht sein.

Mit Ausnahme der Längsachse der Freilaufdiode 29, welche räumlich beliebig im Gehäuse angeordnet sein kann, haben alle Bauelemente sowie die Durchtrittsöffnung in der rückwärtigen Wandung des Gehäuseteils 38 und die Austrittsöffnung in der Frontwandung des Gehäuseteils 39 eine gemeinsame Längsachse. Durch die fluchtende räumliche Anordnung der Bauelemente und Öffnungen sind in funktioneller und räumlicher Hinsicht optimale Ergebnisse erzielt worden.

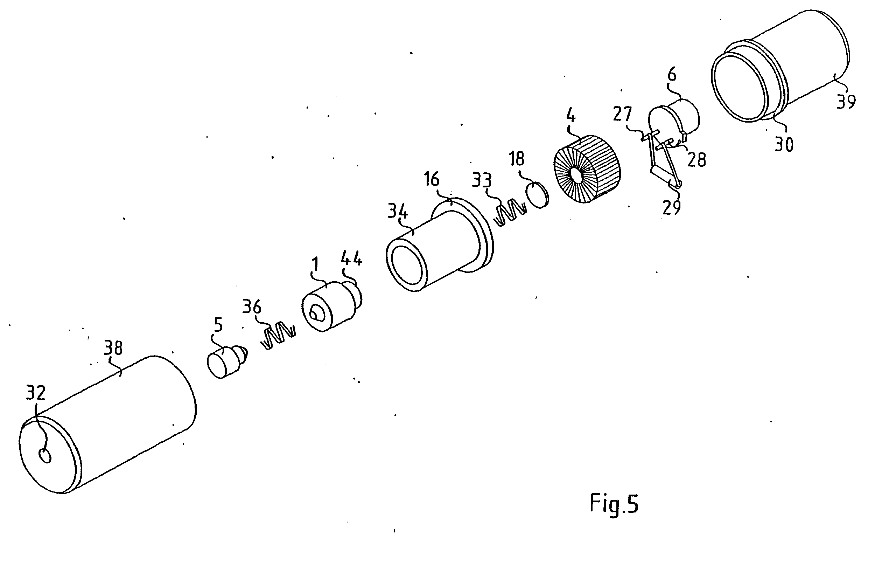

In Fig. 5 sind die einzelnen Bauelemente in ihrer Konfiguration und ihrer räumlichen Zuordnung in übersichtlicher Form dargestellt. Die Bezugszeichen entsprechen denjenigen, wie sie in Fig. 4 für die betreffenden Bauteile etc. verwendet worden sind.

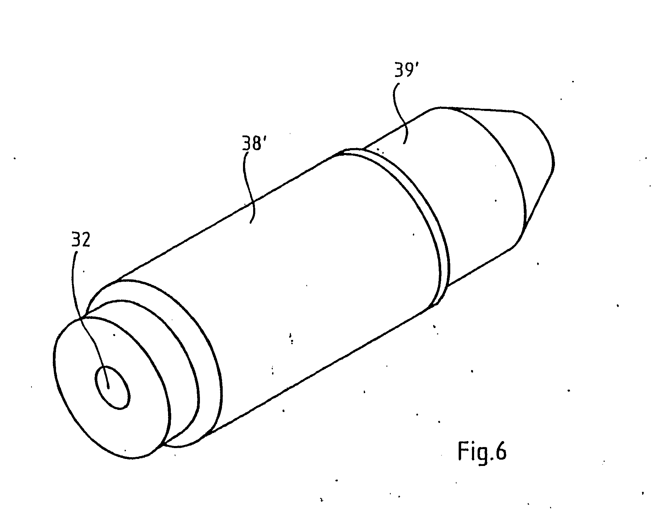

Eine Ausführungsvariante für ein spezielles Anwendungsgebiet zeigt Fig. 6. Hier sind die miteinander vereinigten Gehäuseteile 38' und 39' so gestaltet, daß sie die Form einer Patrone aufweisen. In einer solchen Konzeption und unter Beachtung der gängigen Abmessungen ist die Einrichtung in den Lauf von Schußwaffen für Übungszwecke einsetzbar. Die Lichtstrahlung wird dabei durch Einwirkung des Schlagbolzens der betreffenden Waffe auf den Stößel 35 initiiert, der auf das Piezoelement 1 auftrifft und dieses so beaufschlagt, daß es einen Spannungsimpuls erzeugt, der ausreicht, um über den Übertrager 4 einen solchen Stromimpuls in der Lumineszenzdiode 6 hervorzurufen, daß diese eine Strahlung emittiert. Dieser Vorgang bzw. ein solcher « Schuß » ist mit ein- und derselben Einrichtung beliebig oft wiederholbar. Der Stößel kehrt nach jeder Beaufschlagung durch den nicht dargestellten Schlagbolzen infolge der Rückstellkraft der Feder 36 selbsttätig wieder in seine Ausgangslage zurück.

Bei Anwendung geeigneter lichtelektrischer Empfangsvorrichtungen, beispielsweise in Verbindung mit Zielscheiben, lassen sich mit der Anordnung nach der Erfindung unzählige Schießvorgänge durchführen. Dabei ist besonders vorteilhaft, daß jedermann seine eigene Waffe benutzen kann. Zur Anpassung der Waffen an verschiedene Entfernungen können unterschiedliche optische Linsen oder Linsensysteme verwendet werden, die auswechselbar auf die Mündung des Laufs der betreffenden Waffe aufsteckbar sind. So ist beispielsweise für das sogenannte Combat-Schießen, das bei Abständen von ca. 5 bis 6 m stattfindet, ein relativ großer Streukreis erwünscht. Ein solcher kann auf einfache Weise dadurch erzielt werden, daß auf die Mündung des Laufs der Übungswaffe eine Linse mit einer hierfür geeigneten Brennweite aufgesetzt wird.

Das Gehäuse der Einrichtung kann grundsätzlich jede zweckmäßig erscheinende Form aufweisen. Als besonders vorteilhaft hat sich indessen eine zylindrische oder patronenförmige Gestaltung des Gehäuses erwiesen.

**Patentansprüche**

1. Verfahren zur Erzeugung der für den Betrieb von eine Strahlung emittierenden Halbleiterdioden erforderlichen Stromimpulse, dadurch gekennzeichnet, daß ein Piezoelement kurzzeitig einer mechanischen Druck- oder Zugspannung unterworfen wird und die durch Umwandlung der mechanischen Energie gewonnene elektrische Energie mittels eines Übertragers in den Stromkreis der die Strahlung emittierenden Halbleiterdiode eingekoppelt wird.

2. Verfahren nach Anspruch 1, dadurch gekennzeichnet, daß als Piezoelement ein Einzelelement oder eine Piezosäule verwendet werden und die an den gegenüberliegenden Oberflächen des Elements oder der Säule infolge der Druck- oder Zugspannung erzeugte Spannung der Primärwicklung des Übertragers zugeführt wird, an dessen Sekundärwicklung die Halbleiterdiode angeschlossen ist.

3. Verfahren nach den Ansprüchen 1 oder 2, dadurch gekennzeichnet, daß dem Piezoelement bzw. der Piezosäule ein mechanisch betätig- oder auslösbarer Schlag- oder Druckkörper zugeordnet ist, der nach seiner Betätigung selbsttätig in seine inaktive Ausgangslage zurückgeht oder zwangsläufig in diese Lage zurückzubringen ist.

4. Anordnung zur Durchführung des Verfahrens nach den Ansprüchen 1, 2 oder 3, dadurch gekennzeichnet, daß die aneinander gegenüberliegenden Oberflächen (1', 1") eines Piezoelements (1) angebrachten Elektroden an die Primärwicklung (3) des Übertragers (4) angeschlossen sind, dessen Sekundärwicklung (5) mit einer Lumineszenzdiode (6) in leitender Verbindung steht, und daß dem Piezoelement (1) ein unter der Wirkung einer Rückstellfeder (8) stehender Schlagkörper (7) zugeordnet ist.

5. Anordnung nach Anspruch 4, dadurch gekennzeichnet, daß der Schlagkörper (7) als in einem ein- oder mehrteiligen Gehäuse (38, 39) gegen eine Rückstellkraft axial frei verschiebbar geführter Stößel (35) ausgebildet ist, der das ebenfalls im Gehäuse befindliche Piezoelement (1) räumlich im Abstand nachgeordnet ist, das seinerseits über eine Kontaktfeder (33) mit dem räumlich vor ihm im Gehäuse angeordneten Übertrager (4) elektrisch verbunden ist, an dessen Sekundärwicklung die ebenfalls im Gehäuse untergebrachte Lumineszenzdiode (6) angeschlossen ist, und daß das Gehäuse an seiner diodenseitigen Frontseite eine Austrittsöffnung (24) für die Strahlung aufweist und an seiner rückwärtigen Stirnseite mit einer Durchtrittsöffnung (32) für einen auf den Stößel (35) einwirkenden Schlagbolzen versehen ist.

6. Anordnung nach den Ansprüchen 5 und 6, dadurch gekennzeichnet, daß der Lumineszenzdiode (6) eine Freilaufdiode (29) parallel geschaltet ist.

7. Anordnung nach den Ansprüchen 4 bis 6, dadurch gekennzeichnet, daß der Stößel (35), die die Rückstellkraft aufbringende Druckfeder (36), das Piezoelement (1), die Kontaktfeder (33), der Übertrager (4), die Lumineszenzdiode (6), die in der Frontwandung des Gehäuseteils (39) angebrachte Austrittsöffnung (24) für die Strahlung und die in der rückwärtigen Stirnwandung des Gehäuseteils (38) befindliche Durchtrittsöffnung (32) für den Schlagbolzen achsgleich angeordnet sind.

8. Anordnung nach einem oder mehreren der Ansprüche 4 bis 7, dadurch gekennzeichnet, daß das Gehäuse zweiteilig ausgebildet ist und die Bauelemente Stößel (35), Druckfeder (36), Piezoelement (1) und Kontaktfeder (33) im einen Teil (38) des Gehäuses angeordnet sind und die Bauelemente Übertrager (4), Luminezenzdiode (6) und Freilaufdiode (29) im anderen Gehäuseteil (39) untergebracht sind, und daß die beiden Gehäuseteile (38, 39) durch Kleben miteinander verbunden oder miteinander verschraubt sind.

9. Anordnung nach einem oder mehreren der Ansprüche 4 bis 8, dadurch gekennzeichnet, daß das Piezoelement (1) zusammen mit der Kontaktfeder (33) in eine Aufnahmebuchse (34) eingesetzt ist, die in einer Bohrung (37) im Gehäuseteil (38) angeordnet ist, und daß der Stößel und die Druckfeder in einer an die Bohrung (37) im Gehäuseteil (38) axial anschließenden Bohrung (40) geringeren Durchmessers untergebracht sind.

10. Anordnung nach den Ansprüchen 4 bis 9, dadurch gekennzeichnet, daß die Halbleiterdiode (4) formschlüssig in einer Aufnahmebohrung (20) im Gehäuseteil (39) angeordnet ist und der Übertrager (4) einschließlich seiner Wicklungsanschlüsse, die Anschlüsse der Lumineszenzdiode (6) und die Freilaufdiode (29) in eine Gießmasse (31) eingebettet sind.

11. Anordnung nach den Ansprüchen 4 bis 10, dadurch gekennzeichnet, daß zwischen der stößelseitigen Stirnfläche des Piezoelements (1) und der dieser gegenüberliegenden Anlagefläche des Gehäuseteils (38) eine elastische Zwischenlage angeordnet ist.

12. Anordnung nach einem oder mehreren der Ansprüche 4 bis 11, dadurch gekennzeichnet, daß das Gehäuse (38, 39) die Form einer Patrone aufweist und in eine Schußwaffe für Übungszwecke einsetzbar ist.

**Claims**

1. Method of generating the current pulses required for operating semiconductor diodes emitting rays, characterized in that a piezoelectric element is exposed for a short time to a mechanical compressive or tractive stress and the electrical energy gained from conversion of the mechanical energy is coupled into the electric circuit of the semiconductor diode emittings rays by means of a transformer.

2. Method according to claim 1, characterized in that a single element or a piezoelectric column is used as piezoelectric element and the voltage generated at the opposite surfaces of the element or column as a result of the compressive or tractive stress is fed to the primary winding of the transformer, to whose secondary winding the semiconductor diode is connected.

3. Method according to claims 1 or 2, characterized in that there is associated with the piezoelectric element or the piezoelectric column a mechanically actuatable or triggerable striking or pressing member which after it has been actuated automatically returns to its inactive initial position or can be automatically brought back into this position.

4. Arrangement for performing the method according to claims 1, 2 or 3, characterized in that the electrodes arranged on opposite surfaces (1', 1") of a piezoelectric element (1) are connected to the primary winding (3) of the transformer (4) whose secondary winding (5) is electrically connected to a light-emitting diode (6), and in that there is associated with the piezoelectric element (1) a striking member (7) on which a return spring (8) acts.

5. Arrangement according to claim 4, characterized in that the striking member (7) is in the form of a ram (35) guided in an axially freely displaceable manner against a return force in a one-piece or multipiece housing (38, 39) and spaced downstream from the piezoelectric element (1) which is likewise located in the housing and which, in turn, is electrically connected via a contact spring (33) to the transformer (4) which is arranged upstream therefrom in the housing and to whose secondary winding the light-emitting diode (6), likewise accommodated in the housing, is connected, and in that the housing comprises an outlet opening (24) for the rays at its front diode side and is provided at its rear end side with an opening (32) permitting entry of a striking bolt which acts on the ram (35).

6. Arrangement according to claims 5 and 6, characterized in that a free-wheeling diode (29) is connected in parallel with the light-emitting diode (6).

7. Arrangement according to claims 4 to 6, characterized in that the ram (35), the compression spring (36) exerting the return force, the piezoelectric element (1), the contact spring (33), the transformer (4), the light-emitting diode (6), the outlet opening (24) for the rays arranged in the front wall of the housing section (39) and the opening (32) located in the rear end wall of the housing section (38) to permit entry of the striking bolt are arranged along the same axis.

8. Arrangement according to one or several of claims 4 to 7, characterized in that the housing comprises two sections, and the components ram (35), compression spring (36), piezoelectric element (1) and contact spring (33) are arranged in one section (38) of the housing, and the components transformer (4), light-emitting diode (6) and free-wheeling diode (29) are accommodated in the other housing section (39), and in that the two housing sections (38, 39) are connected to each other by adhesion or are screwed together.

9. Arrangement according to one or several of claims 4 to 8, characterized in that the piezoelectric element (1) together with the contact spring (33) is inserted into a receiving bush (34) arranged in a bore (37) in the housing section (38), and in that the ram and the compression spring are accommodated in a bore (40) of smaller diameter which is axially adjacent to the bore (37) in the housing section (38).

10. Arrangement according to claims 4 to 9, characterized in that the semiconductor diode (6) is positively arranged in a receiving bore (20) in the housing section (39), and the transformer (4) including its winding connections, the connections of the light-emitting diode (6) and the free-wheeling diode (29) are embedded in a casting (31).

11. Arrangement according to claims 4 to 10, characterized in that an intermediate elastic layer is arranged between the end face of the piezoelectric element (1) on the ram side and the bearing surface of the housing section (38) opposite thereto.

12. Arrangement according to one or several of claims 4 to 11, characterized in that the housing (38, 39) has the shape of a cartridge and is insertable into a firearm for practising purposes.

## Revendications

1. Procédé de génération des impulsions électriques nécessaires au fonctionnement d'une diode semiconductrice émettant un rayonnement, caractérisé par le fait que un élément piézoélectrique est brièvement soumis à une contrainte mécanique et que l'énergie électrique gagnée à la conversion de l'énergie mécanique est acheminée par l'intermédiaire d'un transformateur vers le circuit électrique de la diode semiconductrice émettant un rayonnement.

2. Procédé selon la revendication 1, caractérisé par le fait que un élément unique ou une pile d'éléments est utilisé en tant qu'élément piézoélectrique et que la tension électrique générée par des contraintes mécaniques appliquées aux extrémités opposées de l'élément ou de la pile d'éléments est transmise à l'enroulement primaire du transformateur, dont l'enroulement secondaire est raccordé à la diode semiconductrice.

3. Procédé selon les revendications 1 ou 2, caractérisé par le fait que un marteau ou un mouton à action mécanique ou déclenchable est adjoint à l'élément piézoélectrique pour frapper ou comprimer celui-ci, et qu'après son action ce marteau ou ce mouton revient de lui-même sur sa position inactive initiale ou doit y être ramené de force.

4. Disposition matérielle pour l'application des procédés selon les revendications 1, 2 ou 3, caractérisée par le fait que les électrodes apposées aux extrémités opposées (1', 1") d'un élément piézoélectrique (1) sont raccordées à l'enroulement primaire (3) du transformateur (4), dont l'enroulement secondaire (5) conduit par une liaison conductrice à une diode luminescente (6), et que l'élément piézoélectrique (1) est accouplé à un corps frappant ou pressant (7), lui-même soumis à l'action d'un ressort de rappel (8).

5. Disposition matérielle selon la revendication 4, caractérisée par le fait que le corps frappant (7) est constitué par un coulisseau (35) guidé dans un boîtier monobloc ou multiblocs (38, 39) et axialement déplacé contre une force de rappel, et que ce coulisseau est quelque peu décalé en aval par rapport à l'élément piézoélectrique (1) lui aussi placé dans le boîtier et électriquement relié par une lame de contact (33) au transformateur (4) en amont dans l'espace, transformateur dont l'enroulement secondaire est relié à une diode luminescente (6) également placée dans le boîtier, lequel fait état sur sa partie frontale, c'est-à-dire celle où se trouve la diode, d'un orifice (24) laissant le passage aux rayonnements et sur l'arrière duquel un autre orifice (32) est présent pour permettre à un chien ou à un percuteur de frapper sur le coulisseau (35).

6. Disposition matérielle selon les revendications 5 et 6, caractérisée par le fait que une diode à régime libre (29) est branchée en parallèle avec la diode luminescente (6).

7. Disposition matérielle selon les revendications 4, 5 et 6, caractérisée par le fait que le coulisseau (35), le ressort de rappel (36), l'élément piézoélectrique (1), la lame de contact (33), le transformateur (4), la diode luminescente (6), ainsi que les orifices (24 et 32) présents respectivement sur le front (39) et l'arrière (38) du boîtier, l'un pour laisser passer les rayonnements de la diode et l'autre pour laisser passer un chien ou un percuteur, sont tous disposés sur un même axe.

8. Disposition matérielle selon une ou plusieurs des revendications 4 à 7, caractérisée par le fait que le boîtier est constitué de deux parties et que les pièces suivantes : coulisseau (35), ressort de rappel (36), élément piézoélectrique (1) et lame de contact (33), sont placées dans l'une (38) des deux parties du boîtier, alors que les autres pièces : transformateur (4), diode luminescente (6) et diode à régime libre (29), sont placées dans l'autre partie (39) du boîtier, et que ces deux parties (38 et 39) sont accouplées l'une à l'autre, soit par collage, soit par vissage.

9. Disposition matérielle selon une ou plusieurs des revendications 4 et 8, caractérisée par le fait que l'élément piézoélectrique (1) est disposé, en commun avec la lame de contact (33), dans une douille (34) elle-même disposée dans un orifice (37) percé sur la partie (38) du boîtier, et que le coulisseau (35) et le ressort de rappel (36) sont disposés dans un orifice (40), de diamètre plus faible que l'orifice (37) percé sur la partie (38) du boîtier, ces deux orifices (40 et 37) étant l'un dans l'axe de l'autre.

10. Disposition matérielle selon les revendications 4 à 9, caractérisée par le fait que la diode semiconductrice (6) est encastrée dans un orifice (20) percé sur la partie (39) du boîtier et que le transformateur (4), y compris ses deux raccordements d'enroulements, les raccordements de la diode luminescente (6) et ceux de la diode à régime libre (29), sont noyés dans une matière coulée (31).

11. Disposition matérielle selon les revendications 4 à 10, caractérisée par le fait que une couche intermédiaire élastique est disposée entre la partie frontale de l'élément piézoélectrique (1), c'est-à-dire celle soumise aux coups ou à la pression du coulisseau, et sa partie opposée, c'est-à-dire celle reposant sur la partie (38) du boîtier.

12. Disposition matérielle selon une ou plusieurs des revendications 4 à 11, caractérisée par le fait que le boîtier (38, 39) accuse une forme de cartouche et peut être employé, à fins d'exercices de tir, en tant que cartouche à blanc dans une arme à feu.

Fig.1

Fig.2

Fig.3

1

Fig.4

Fig.5

Fig.6